# FASCICULE DE BREVET EUROPEEN

(11) **EP 4 471 747 B1**
(45) Date de publication et mention de la délivrance du brevet: **13.08.2025**
(21) Numéro de dépôt: 23315221.4
(22) Date de dépôt: 31.05.2023
(51) Int. Cl.: G09B 9/46, F02C 9/42

(54) **PROCÉDÉ D'ENTRAÎNEMENT AU PILOTAGE D'UN GIRAVION, SYSTÈME ET GIRAVION ASSOCIÉS**
VERFAHREN ZUM STEUERN EINES DREHFLÜGLERS, ENTSPRECHENDES SYSTEM UND DREHFLÜGLER
METHOD FOR TRAINING THE PILOTING OF A ROTORCRAFT, ASSOCIATED SYSTEM AND ROTORCRAFT

(43) Date de publication de la demande: 04.12.2024
(73) Titulaire: AIRBUS HELICOPTERS, 13725 Marignane Cedex (FR); AIRBUS HELICOPTERS DEUTSCHLAND GmbH, 86609 Donauwörth (DE)
(72) Inventeur: Dumur, Guillaume, F-13300 SALON DE PROVENCE (FR); Chassagne, Ivan, F-76520 FRANQUEVILLE-ST-PIERRE (FR); Ockier, Carl, D-86153 AUGSBURG (DE)
(74) Mandataire: GPI Brevets

(56) Documents cités:
- EP-A1- 2 790 170
- EP-A1- 3 738 888
- EP-A1- 4 123 623
- WO-A2-2012/059671
- US-A- 4 831 567
- US-A- 5 873 546
- US-A1- 2002 133 322
- US-A1- 2005 234 689

## Description

La présente invention concerne le domaine des simulations effectuées à bord d'un giravion pour l'entraînement d'un pilote. La présente invention relève plus particulièrement d'une simulation relative à l'entraînement d'un pilote à un cas de panne de l'un des moteurs d'un giravion multimoteur, et notamment d'un giravion bimoteur.

Un aéronef peut comprendre au moins un rotor Le ou les rotors sont entraînés en rotation par un groupe de motorisation. Il est fréquent qu'un tel groupe de motorisation comporte au moins deux moteurs, tels des turbomoteurs, des moteurs à pistons ou encore des moteurs électriques notamment. Ces moteurs sont alors en prise sur une chaîne de transmission de puissance interposée entre le groupe de motorisation et les organes du giravion consommateurs de puissance mécanique, dont notamment le ou les rotors.

Par ailleurs, le fonctionnement des moteurs est géré par un système de régulation. Ce système de régulation permet de mettre en œuvre un mode de fonctionnement des moteurs communément désigné mode AEO (d'après l'acronyme anglais All Engine Opérative) dans lequel tous les moteurs du groupe de motorisation sont opérationnels et transmettent chacun une puissance motrice aux organes consommateurs du giravion tels que le ou les rotors.

Afin de diminuer la consommation de carburant des moteurs thermiques de l'aéronef, un mode de fonctionnement dit « économique » peut être utilisé, principalement durant une phase de vol de croisière. Selon ce mode de fonctionnement économique, un seul moteur thermique fournit la puissance nécessaire pour entraîner en rotation le rotor de l'aéronef. Le ou les autres moteurs thermiques ne fournissent pas de puissance mécanique significative, voire ne fournissent aucune puissance. Ce mode de fonctionnement économique induit donc un fonctionnement asymétrique des moteurs thermiques, les moteurs thermiques ne fonctionnant pas de façon identique.

Selon une première variante, un seul moteur thermique fonctionne et assure seul l'entraînement en rotation du rotor de l'aéronef. Le ou les autres moteurs thermiques sont arrêtés et ne sont pas alimentés en carburant. Dans le cas d'un turbomoteur à turbine libre, les organes tournants du générateur de gaz peuvent toutefois être maintenus en rotation par un moteur électrique pour faciliter et accélérer le redémarrage du moteur.

Selon une seconde variante, tous les moteurs sont démarrés et alimentés en carburant, mais un seul moteur thermique fournit une puissance mécanique significative de sorte à entraîner en rotation la ou les rotors de l'aéronef. Le ou les autres moteurs thermiques sont démarrés, mais fonctionnent selon un état de fonctionnement dit « de super ralenti » et ne fournissent à ce titre aucune puissance mécanique.

Quelle que soit la variante de ce mode de fonctionnement économique, le fonctionnement des moteurs thermiques est donc asymétrique, les moteurs thermiques ne fonctionnant pas de façon identique.

Ainsi, le document EP3738888 divulgue un procédé de fonctionnement d'un giravion comprenant une pluralité de moteurs conçus pour fournir une puissance motrice à au moins un rotor.

Par ailleurs, un mode de fonctionnement asymétrique est mis en œuvre, dans lequel au moins un premier moteur est un moteur dit « actif », c'est-à-dire fournissant une puissance motrice à au moins un rotor, et au moins un deuxième moteur est un moteur dit « inactif », c'est-à-dire ne fournissant sensiblement aucune puissance motrice.

Ce procédé comprend la surveillance d'une panne du moteur actif. en présence d'une telle panne, la puissance de sortie du moteur inactif est automatiquement augmentée. Le moteur inactif réactivé fonctionne alors selon un régime dit « OEI » (d'après l'acronyme anglais One Engine Inoperative). Un moteur disponible fonctionnant en mode OEI fournit une puissance pendant une durée prédéfinie, pour permettre temporairement au giravion de progresser en vol malgré l'indisponibilité de l'un des moteurs.

Durant la phase transitoire allant de la panne du moteur actif à la réactivation du moteur inactif, la puissance mécanique transmise au(x) rotor(s) est alors temporairement nulle ou fortement réduite et peut nécessiter que le pilote effectue une phase de vol en autorotation jusqu'à ce le moteur initialement inactif soit devenu actif.

Dans ces conditions, il peut être intéressant d'entrainer les pilotes à un telle séquence de vol.

L'entraînement d'un pilote est fréquemment réalisé par simulation effectuée en vol réel à bord d'un giravion, sous contraintes de conditions de vol favorables. A cet effet, un cas de panne de l'un des moteurs peut être simulé sans toutefois rendre inefficients les moteurs, pour maintenir disponibles tous les moteurs et permettre leur exploitation individuelle en cas de panne réelle de l'un d'entre eux. Il est préférable d'éviter dans le cadre d'une telle simulation, un fonctionnement individuel des moteurs selon les contraintes imposées par les modes OEI. En effet, le fonctionnement d'un moteur en mode OEI génère pour ce moteur des sollicitations importantes engendrant des opérations de maintenance coûteuses.

C'est pourquoi dans le cadre d'une simulation, il est fréquent d'exploiter simultanément tous les moteurs pour simuler une panne de l'un des moteurs. Dans le cadre d'une exécution d'un mode OEI simulé faisant l'objet de l'entraînement, la puissance de consigne à fournir est par exemple équitablement répartie entre tous les moteurs maintenus synchrones avec la chaîne de transmission de puissance.

Dans ce cas, chacun des moteurs fournit une puissance mécanique correspondante à la puissance de consigne divisée par le nombre de moteurs. Dans ce cas, chacun des moteurs est alors en fonctionnement et en prise synchrone sur la chaîne de transmission de puissance. En cas de panne réelle de l'un des moteurs, la réactivité d'un autre moteur pour fournir la totalité de la puissance nécessaire est satisfaisante. De telles modalités de simulation permettent ainsi de préserver les moteurs lors d'un entraînement d'un à la panne d'un moteur.

Pour apprécier les approches connues relatives à diverses simulations en vol d'une panne d'un moteur d'un giravion équipé de plusieurs moteurs, on pourra par exemple se reporter aux documents US2005234689 et US5873546. Plus spécifiquement concernant la fourniture d'une puissance de consigne conjointement par plusieurs moteurs dans le cadre d'une simulation en vol d'une panne de l'un des moteurs, on pourra se reporter aux documents US4831567, US6917908, CA2452212, FR3004164, US20230019379 et US2002/133322.

La présente invention a alors pour objet de proposer un procédé permettant d'améliorer la formation des pilotes de giravions aux phases de vol asymétrique du groupe de motorisation. La sûreté est ainsi améliorée lors de telles phases de vol asymétrique en cas de panne du moteur actif.

Un autre objectif de l'invention est de limiter de l'endommagement des moteurs en évitant de solliciter les moteurs en mode OEI.

Enfin, l'invention permet à un instructeur de pouvoir constater de l'avancement de la formation d'un pilote grâce une simulation d'une phase de vol asymétrique.

L'invention se rapporte à un procédé d'entraînement au pilotage d'un giravion comportant au moins deux moteurs et au moins un rotor participant à une sustentation dudit giravion dans l'air.

Un tel procédé comporte au moins les étapes suivantes :
- pilotage du giravion selon un mode dit AEO dans lequel chacun desdits au moins deux moteurs délivre une première puissance motrice P1 pour entraîner en rotation au moins ledit au moins un rotor,
- activation d'une première commande pour démarrer une phase d'entraînement simulant un vol asymétrique dans lequel un premier moteur desdits au moins deux moteurs est configuré pour fournir exclusivement une puissance motrice audit au moins un rotor et un second moteur desdits au moins deux moteurs est configuré pour fournir aucune puissance motrice audit au moins un rotor, et
- désactivation de la première commande pour quitter la phase d'entraînement.

Selon l'invention, la phase d'entraînement est remarquable en ce qu'elle comporte une première phase de vol comportant :
∘ une première régulation avec un contrôleur régulant lesdits au moins deux moteurs pour délivrer respectivement chacun une deuxième puissance motrice supérieure à la première puissance motrice,
∘ un premier affichage avec un afficheur d'une information porteuse d'au moins deux puissances simulées aptes à être délivrées respectivement par lesdits au moins deux moteurs, chacune desdites au moins deux puissances simulées étant distincte de la deuxième puissance motrice.

Autrement dit, un tel procédé permet de simuler une phase de vol asymétrique et au moins une phase de transition entre un vol asymétrique et un vol symétrique.

En effet, la première phase de vol permet à chacun desdits au moins deux moteurs de fournir la deuxième puissance motrice audit au moins un rotor mais un afficheur permet de simuler à au moins un pilote que le premier moteur fournit exclusivement une puissance motrice audit au moins un rotor.

Un tel afficheur peut, par exemple comprendre, un écran permettant d'afficher des cadrans avec chacun une aiguille mobile ou des échelles avec chacune un index mobile formant l'information porteuse des au moins deux puissances simulées.

Le contrôleur peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Eventuellement, la phase d'entrainement peut être déclenchée par un pilote lorsque les conditions du giravion sont compatibles avec un vol asymétrique.

Dès lors, une telle première phase de vol peut être mise en œuvre tant que les conditions de cette première phase vol restent compatibles avec le vol asymétrique.

Ainsi, la transition entre un vol asymétrique et un vol symétrique peut être mise en œuvre automatiquement par le procédé lorsque les conditions du giravion évoluent telle que par exemple lorsque la hauteur du giravion par rapport au sol décroît en dessous d'une valeur de seuil, lorsque la vitesse d'avancement du giravion est inférieure à une valeur de seuil ou encore lorsqu'une demande de puissance instantanée dépasse une valeur de seuil.

Par ailleurs, un afficheur des conditions du giravion peut permettre d'indiquer au pilote si les conditions initiales lors du pilotage du giravion selon le mode AEO sont compatibles avec un vol asymétrique.

Dans ce cas, la première commande peut être activée par le pilote pour démarrer une phase entraînement au vol asymétrique.

Dans le cas contraire, la première commande peut être inhibée.

Une fois l'entraînement du pilote au vol asymétrique et/ou aux phases de transition terminé, le pilote désactive alors la première commande pour quitter la phase d'entraînement.

Avantageusement, lesdites au moins deux puissances simulées peuvent comporter une première puissance simulée et une seconde puissance simulée, la première puissance simulée étant affichée comme exclusivement fournie par le premier moteur, la première puissance simulée étant supérieure à la deuxième puissance motrice pendant la première phase de vol, la seconde puissance simulée étant affichée comme exclusivement fournie par le second moteur, la seconde puissance simulée étant nulle pendant la première phase de vol.

En pratique, lorsque lesdites au moins deux puissances simulées comportent une première puissance simulée et une seconde puissance simulée, après la première phase de vol, le procédé peut comporter une activation d'une seconde commande pour démarrer une deuxième phase de vol permettant de mettre en œuvre un pilotage d'entraînement du giravion en autorotation, la deuxième phase de vol comportant :
- une deuxième régulation avec le contrôleur régulant lesdits au moins deux moteurs, la deuxième régulation mettant en œuvre successivement :
   ∘ une diminution de la puissance motrice fournie respectivement par chacun desdits au moins deux moteurs de la deuxième puissance motrice à une valeur de seuil minimale inférieure à la première puissance motrice,
   ∘ un maintien de la puissance motrice fournie respectivement par chacun desdits au moins deux moteurs à la valeur de seuil minimale, et
   ∘ une augmentation de la puissance motrice fournie respectivement par chacun desdits au moins deux moteurs jusqu'à une valeur de seuil maximale supérieure ou égale à la première puissance motrice,
- un deuxième affichage avec l'afficheur d'une diminution d'une première valeur courante de la première puissance simulée simulant une panne du premier moteur puis une augmentation d'une seconde valeur courante de la seconde puissance simulée simulant un démarrage du second moteur.

Par suite, un tel procédé peut permettre également de simuler une panne du moteur actif lors d'un vol asymétrique simulé et d'entrainer un pilote à effectuer une phase d'autorotation pendant laquelle un démarrage du second moteur est alors simulé. En outre, une telle deuxième phase de vol asymétrique peut être relativement longue et durer 10 à 15 secondes, voire jusqu'à 20 secondes.

Une telle simulation est obtenue en régulant avec le contrôleur la puissance motrice réellement transmise conjointement par les au moins deux moteurs.

Ainsi, pendant cette deuxième phase de vol, le procédé permet de simuler une chute brutale de la puissance motrice transmise audit au moins un rotor par le premier moteur, une absence de puissance motrice transmise audit au moins un rotor puis une augmentation progressive de la puissance motrice transmise audit au moins un rotor par le second moteur.

En outre, la diminution de la puissance motrice fournie respectivement par chacun desdits au moins deux moteurs peut présenter un taux de variation négatif prédéterminé.

Le maintien de la puissance motrice fournie respectivement par chacun desdits au moins deux moteurs à la valeur de seuil minimale Pmin peut être réalisé pendant une durée prédéterminée au moyen d'un chronomètre.

L'augmentation de la puissance motrice fournie respectivement par chacun desdits au moins deux moteurs peut présenter un taux de variation positif prédéterminé.

Avantageusement, après la deuxième phase de vol, le procédé peut comporter une troisième phase de vol comportant :
∘ une troisième régulation avec le contrôleur régulant lesdits au moins deux moteurs pour délivrer respectivement chacun la valeur de seuil maximale Pmax, et
∘ un troisième affichage avec ledit afficheur de la première puissance simulée comme étant nulle, et de la seconde puissance simulée comme étant supérieure à la deuxième puissance motrice.

Autrement dit, la troisième phase de vol peut permettre de simuler un fonctionnement du second moteur en mode OEI, la puissance motrice de consigne à fournir au(x) rotor(s) étant alors équitablement répartie entre tous les moteurs maintenus synchrones avec la chaîne de transmission de puissance.

Le procédé d'entraînement selon l'invention permettant alors d'entrainer un pilote à effectuer à la suite une première transition entre le mode AEO des moteurs et un mode asymétrique puis une seconde transition entre ce mode asymétrique et le mode OEI du second moteur.

Par ailleurs, la première commande et la seconde commande peuvent être mises en œuvre de différentes manières.

Selon un premier exemple de réalisation, la première commande et la seconde commande peuvent être activées et désactivées par un unique organe de commande.

Par exemple, un tel organe de commande peut être formé par un interrupteur ou bouton rotatif.

Selon un deuxième exemple de réalisation, la première commande peut être activée et désactivée par un premier organe de commande, la seconde commande peut être activée et désactivée par un second organe de commande distinct du premier organe de commande.

Dans ce cas, le premier organe de commande et le second organe de commande sont par exemple des boutons bistables qui peuvent être actionnés l'un après l'autre.

Selon un troisième exemple de réalisation, la première commande peut être activée par un premier organe de commande, la seconde commande peut être activée par un deuxième organe de commande distinct du premier organe de commande, la première commande et la seconde commande peuvent être désactivées par un troisième organe de commande distinct des premier organe de commande et deuxième organe de commande.

Dans ce cas, le premier organe de commande et le deuxième organe de commande sont par exemple des boutons monostables agencés sur une planche de bord ou sur un levier de commande du giravion.

Le troisième organe de commande est par exemple formé par un interrupteur monostable de type bouton ou gâchette agencé sur un levier de commande du giravion.

Par ailleurs, la régulation de la puissance motrice transmise conjointement par les au moins deux moteurs peut être mise en œuvre de différentes manières.

Selon une première variante, le contrôleur peut réguler un couple moteur transmis par chacun desdits au moins deux moteurs à une chaine de transmission de puissance permettant une transmission de puissance motrice audit au moins un rotor.

Dans ce cas, le contrôleur permet de rendre négligeable la puissance transmise audit au moins un rotor, tout en assurant une puissance minimale afin de conserver une synchronisation des deux moteurs avec la chaine de transmission de puissance pouvant comporter une roue libre.

La désynchronisation entre une partie menante et une partie menée de cette roue libre peut être évitée en contrôlant le couple moteur à une valeur minimale proche de zéro. Ce contrôle du couple moteur transmis peut être réalisé via une boucle de régulation dédiée permettant, dans un premier temps, de réduire à une valeur basse le couple moteur de chaque moteur, afin de faire décélérer les moteurs de manière très rapide. Quand cette valeur cible est atteinte, la décélération est stoppée et la valeur minimum de couple est contrôlée de manière active par la boucle de couple, afin de maintenir le niveau minimum de couple pendant une phase sans puissance motrice transmise au(x) rotor(s) correspondant à une partie de la deuxième phase de vol asymétrique simulée.

Selon une deuxième variante, le contrôleur peut réguler une vitesse de rotation d'au moins deux générateurs de gaz respectifs de chacun desdits au moins deux moteurs
Dans ce cas, le contrôleur permet d'ajuster la vitesse de rotation de chaque générateur de gaz à un niveau cible afin de faire décélérer les moteurs de manière très rapide et obtenir une phase sans puissance motrice transmise au(x) rotor(s).

Une telle vitesse de rotation cible des générateurs de gaz des moteurs peut être déterminée par des essais en vols, des tests au banc ou encore par des simulations.

En fonction de cette vitesse de rotation cible des générateurs de gaz, les au moins deux moteurs vont alors permettre de délivrer une puissance motrice audit au moins un rotor principal égale à la puissance de seuil pendant une partie de la deuxième phase de vol asymétrique simulée.

Selon une troisième variante, le contrôleur peut réguler une vitesse de rotation d'au moins deux arbres d'entrée d'une boîte de transmission de puissance principale, chacun desdits au moins deux arbres d'entrée étant respectivement entraîné en rotation par lesdits au moins deux moteurs.

Dans ce cas, le contrôleur permet d'ajuster la vitesse de rotation de chaque arbre d'entrée à un niveau cible afin de faire décélérer les moteurs de manière très rapide et obtenir une phase sans puissance motrice transmise au(x) rotor(s).

De même que pour le générateur de gaz, une telle vitesse de rotation cible des arbres d'entrée de la boîte de transmission de puissance principale peut être déterminée par des essais en vols, des tests au banc ou encore par des simulations.

En fonction de cette vitesse de rotation cible des arbres d'entrée de la boîte de transmission de puissance principale, les au moins deux moteurs vont alors permettre de délivrer une puissance motrice audit au moins un rotor principal égale à la puissance de seuil pendant une partie de la deuxième phase de vol asymétrique simulée.

La présente invention vise aussi un programme d'ordinateur comprenant des instructions qui, lorsque le programme est exécuté, conduisent à mettre en œuvre le procédé d'entraînement au pilotage selon l'invention précédemment décrit.

Le programme est par exemple exécuté par un ordinateur ou un calculateur, comprenant au moins un processeur, au moins un circuit intégré, au moins un système programmable, au moins un circuit logique, et une mémoire, ces exemples ne limitant pas la portée donnée à l'expression « ordinateur » ou « calculateur ».

La mémoire permet de stocker le programme d'ordinateur ainsi que différentes informations utilisées par le programme d'ordinateur, à savoir les données de puissance motrice à transmettre audit au moins un rotor en fonction des différentes phases de vol, des modèles de conditions compatibles avec un vol asymétrique, des données météorologiques et des données environnementales.

La présente invention vise également un système d'entraînement au pilotage d'un giravion comportant au moins deux moteurs et au moins un rotor participant à une sustentation du giravion dans l'air.

En outre, un tel système est remarquable en ce qu'il est configuré pour mettre en œuvre le procédé d'entraînement au pilotage selon l'invention précédemment décrit, le système comportant le contrôleur et l'afficheur.

Un tel système est alors intégré à un giravion et constitue à ce titre un équipement du giravion. Le système d'entraînement au pilotage peut alors être relié à un dispositif de gestion de vol du giravion ou à un dispositif de pilotage automatique du giravion. De plus, la simulation de la puissance motrice transmise audit au moins un rotor principal peut être affichée sur un afficheur tel un écran du giravion, des verres de lunettes ou encore sur une visière d'un casque porté par un pilote.

La présente invention vise enfin un giravion remarquable en ce qu'il comporte un système d'entraînement au pilotage selon l'invention précédemment décrit.

L'invention et ses avantages apparaîtront avec plus de détails dans le cadre de la description qui suit avec des exemples donnés à titre illustratif en référence aux figures annexées qui représentent :
la figure 1, un schéma d'un giravion conforme à l'invention,
la figure 2, un logigramme illustrant un premier exemple de procédé d'entraînement conforme à l'invention,
la figure 3, un logigramme illustrant un second exemple de procédé d'entraînement conforme à l'invention,
la figure 4, un graphique illustrant les puissances fournies par les au moins deux moteurs et simulées, conformément à l'invention
la figure 5, un exemple de réalisation d'un organe de commande permettant la mise en œuvre du procédé, conformément à l'invention,
la figure 6, un exemple de réalisation de deux organes de commande permettant la mise en œuvre du procédé, conformément à l'invention, et
la figure 7, un exemple de réalisation de trois organes de commande permettant la mise en œuvre du procédé, conformément à l'invention.

Les éléments présents dans plusieurs figures distinctes sont affectés d'une seule et même référence.

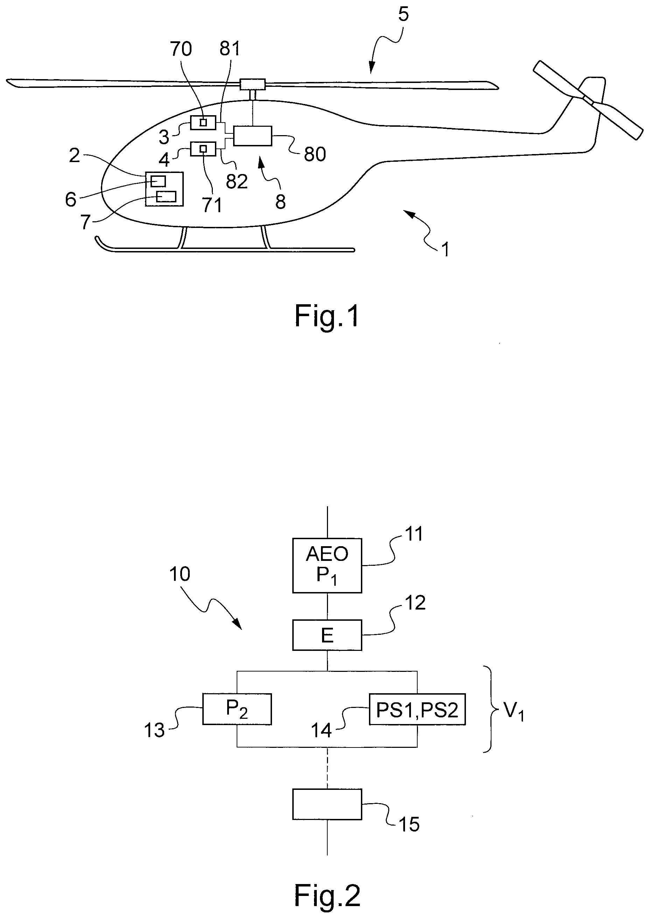

Telle que représentée à la figure 1, l'invention concerne un giravion 1 comportant au moins un rotor 5 de sustentation entraîné en rotation par au moins deux moteurs 3, 4 tels des turbomoteurs comportant respectivement chacun un générateur de gaz 70, 71 et au moins une turbine libre de puissance respectivement en aval d'un générateur de gaz. Chaque turbine libre de puissance est solidaire d'un arbre de puissance apte à être relié une chaîne de transmission de puissance 8
En outre, une telle chaine de transmission de puissance 8 permet une transmission d'une puissance motrice des moteurs 3, 4 au rotor 5. Cette chaine de transmission de puissance 8 peut notamment comporter une boîte de transmission de puissance principale 80 et deux arbres d'entrée 81, 82 coopérants avec la boîte de transmission de puissance principale 80.

Par ailleurs, le giravion 1 est équipé d'un système 2 d'entraînement au pilotage. Un tel système 2 comporte notamment un contrôleur 6 régulant lesdits au moins deux moteurs 3, 4 et un afficheur 7 pour afficher des puissances fournies respectivement par lesdits au moins deux moteurs 3, 4 ou pour afficher des puissances simulées aptes à être fournies lesdits au moins deux moteurs 3, 4.

Le contrôleur 6 peut comprendre des calculateurs moteurs, voire un calculateur central pilotant les calculateurs moteurs. Un tel contrôleur comporte également des senseurs et au moins un doseur de carburant pour effectuer la régulation desdits au moins deux moteurs 3, 4.

En outre, la régulation des au moins deux moteurs 3, 4 peut être mise en œuvre de différentes manières.

Ainsi selon un premier exemple de réalisation, le contrôleur 6 peut réguler un couple moteur transmis par chacun desdits au moins deux moteurs 3, 4 à la chaine de transmission de puissance 8. Dans ce cas, le contrôleur 6 comporte alors des senseurs de couple tels des couplemètres mesurant le couple moteur transmis par chacun desdits au moins deux moteurs 3, 4 à la chaine de transmission de puissance 8.

Selon un deuxième exemple de réalisation, le contrôleur 6 peut réguler une vitesse de rotation des au moins deux générateurs de gaz 70, 71 respectifs de chacun desdits au moins deux moteurs 3, 4. Dans ce cas, le contrôleur 6 comporte alors des senseurs de vitesse mesurant la vitesse de rotation de chacun desdits au moins deux générateurs de gaz 70, 71.

Selon un troisième exemple de réalisation, le contrôleur 6 peut réguler une vitesse de rotation des au moins deux arbres d'entrée 81, 82 de la boîte de transmission de puissance principale 80. Dans ce cas, le contrôleur 6 comporte alors des senseurs de vitesse mesurant la vitesse de rotation de chacun des au moins deux arbres d'entrée 81, 82.

En outre, telle que représentée à la figure 2, l'invention concerne également un procédé 10 comportant un pilotage 11 du giravion 1 selon un mode AEO dans lequel chacun desdits au moins deux moteurs 3, 4 délivre une première puissance motrice P1 pour entraîner en rotation au moins ledit au moins un rotor 5. Ainsi, le contrôleur 6 régule l'alimentation en carburant en fonction d'une consigne permettant à chacun desdits au moins deux moteurs 3, 4 de délivrer la première puissance motrice P1.

Un tel procédé 10 comporte ensuite une activation 12 d'une première commande pour démarrer une phase d'entraînement E simulant un vol asymétrique dans lequel un premier moteur 3 desdits au moins deux moteurs 3, 4 est configuré pour fournir exclusivement une puissance motrice audit au moins un rotor 5 et un second moteur 4 desdits au moins deux moteurs 3, 4 est configuré pour fournir aucune puissance motrice audit au moins un rotor 5.

La première commande transmet ainsi un signal analogique, numérique ou optique au contrôleur 6 qui en réaction effectue une première régulation 13. Cette phase d'entraînement E comprend donc une première phase de vol V1 comportant la première régulation 13 avec le contrôleur 6 régulant lesdits au moins deux moteurs 3, 4 pour délivrer respectivement chacun une deuxième puissance motrice P2 supérieure ou égale à la première puissance motrice P1.

Une telle première régulation 13 peut par exemple consister à adapter un débit de carburant au moyen d'un doseur de carburant en amont d'une chambre de combustion de chaque moteur 3, 4.

De même, la première commande transmet un signal analogique, numérique ou optique à l'afficheur 7 qui en réaction effectue un premier affichage 14. La première phase de vol V1 comporte ce premier affichage 14 avec l'afficheur 7 d'une information porteuse d'au moins deux puissances simulées PS1, PS2 aptes à être délivrées respectivement par lesdits au moins deux moteurs 3, 4, chacune desdites au moins deux puissances simulées PS1, PS2 étant distincte de la deuxième puissance motrice P2.

En outre, lesdites au moins deux puissances simulées PS1, PS2 comportent une première puissance simulée PS1 et une seconde puissance simulée PS2.

La première puissance simulée PS1 est affichée sur l'afficheur 7 comme étant exclusivement fournie par le premier moteur 3 par exemple via une aiguille agencée en regard d'un cadran.

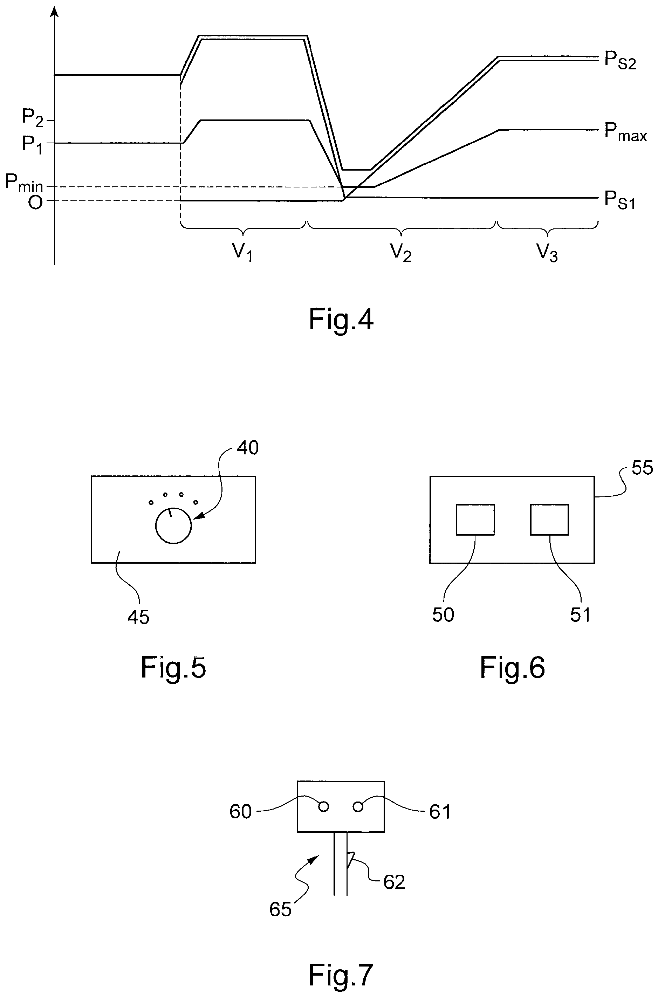

Telle que représentée sur la figure 4, cette première puissance simulée PS1 est alors supérieure à la deuxième puissance motrice P2 pendant cette première phase de vol V1. Typiquement lorsque le giravion est équipé de deux moteurs, la première puissance simulée PS1 peut être choisie égale au double de la deuxième puissance motrice P2.

La seconde puissance simulée PS2 est affichée quant à elle comme étant exclusivement fournie par le second moteur 4, cette seconde puissance simulée PS2 étant nulle pendant ladite première phase de vol V1.

Le procédé 10 comporte ensuite une désactivation 15 de la première commande pour quitter la phase d'entraînement E.

Une telle désactivation 15 peut être mise en œuvre automatiquement par le système 2 d'entraînement au pilotage s'il comporte des senseurs d'environnement mesurant les conditions de vol du giravion et lorsque ces conditions de vol deviennent incompatibles avec un vol asymétrique.

Alternativement ou complémentairement, la désactivation 15 peut également être opérée par un organe de commande actionné par un pilote du giravion lorsque l'entraînement au vol asymétrique est terminé ou en cas d'urgence.

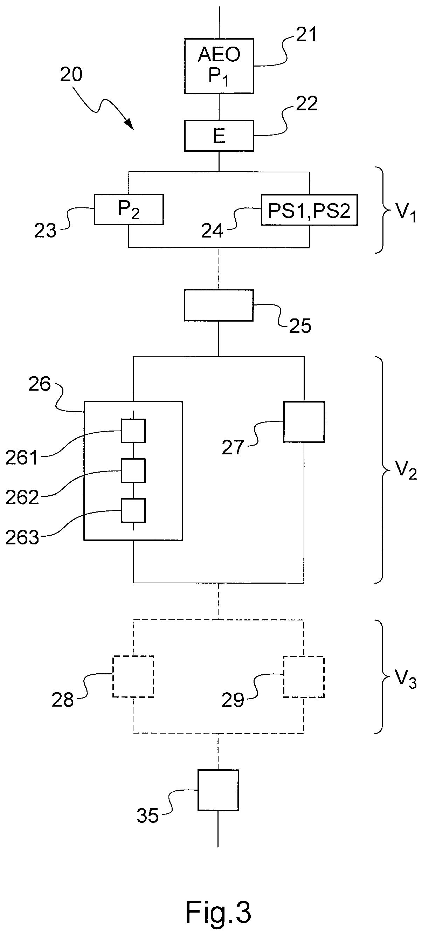

Le procédé 20 de la figure 3 peut également comporter les étapes de pilotage 21 du giravion 1 selon un mode AEO, d'activation 22 d'une première commande puis les étapes de régulation 23 et d'affichage 24 telles que précédemment décrites à la figure 2 pour le procédé 10.

En plus de ces étapes, le procédé 20 comporte alors, après la première phase de vol V1, une activation 25 d'une seconde commande pour démarrer une deuxième phase de vol V2 permettant de mettre en œuvre un pilotage d'entraînement du giravion 1 en autorotation.

A l'instar de la première phase de vol V1, la seconde commande transmet ainsi un signal analogique, numérique ou optique au contrôleur 6 qui en réaction effectue une deuxième régulation 26 régulant lesdits au moins deux moteurs 3, 4.

La deuxième phase de vol V2 met donc en œuvre cette deuxième régulation 26 avec le contrôleur 6.

Lors d'une telle deuxième régulation 26, le contrôleur 6 régule chaque moteur pour mettre en œuvre successivement une diminution 261 de la puissance motrice fournie respectivement par chacun desdits au moins deux moteurs 3, 4 de la deuxième puissance motrice P2 à une valeur de seuil minimale Pmin inférieure à la première puissance motrice P1, un maintien 262 de ladite puissance motrice fournie respectivement par chacun desdits au moins deux moteurs 3, 4 à la valeur de seuil minimale Pmin, puis une augmentation 263 de la puissance motrice fournie respectivement par chacun desdits au moins deux moteurs 3, 4 jusqu'à une valeur de seuil maximale Pmax supérieure ou égale à la première puissance motrice P1.

La deuxième phase de vol V2 comporte également un deuxième affichage 27 avec l'afficheur 7 d'une diminution d'une première valeur courante de la première puissance simulée PS1 simulant une panne du premier moteur 3 puis une augmentation d'une seconde valeur courante de la seconde puissance simulée PS2 simulant un démarrage du second moteur 4.

Par ailleurs, après la deuxième phase de vol V2, le procédé 20 peut éventuellement comporter une troisième phase de vol V3 comportant une troisième régulation 28 avec le contrôleur 6 qui régule lesdits au moins deux moteurs 3, 4 pour que chaque moteur délivre une puissance égale à la valeur de seuil maximale Pmax, et un troisième affichage 29 avec l'afficheur 7 de la première puissance simulée PS1 comme étant nulle, et de ladite seconde puissance simulée PS2 comme étant égale au double de la deuxième puissance motrice P2.

Enfin le procédé 20 comporte une désactivation 35 de la première commande pour quitter la phase d'entraînement E.

Comme pour la désactivation 15, une telle désactivation 35 peut être mise en œuvre automatiquement par le système 2 et alternativement ou complémentairement, elle peut également être opérée par un organe de commande actionné par un pilote du giravion.

Telle que représentée à la figure 5, la première commande et ladite seconde commande peuvent être activées et désactivées par un unique organe de commande 40 représenté sous la forme d'un commutateur rotatif à au moins trois positions stable agencé sur une planche de bord 45.

Une première position peut correspondre à la désactivation de la première commande, une deuxième position peut correspondre à la l'activation de la première commande et la désactivation de la seconde commande et une troisième position peut correspondre à l'activation de la première commande et l'activation de la seconde commande.

Selon un autre exemple illustré à la figure 6, la première commande peut être activée et désactivée par un premier organe de commande 50, la seconde commande peut être activée et désactivée par un second organe de commande 51 distinct du premier organe de commande 50.

Le premier organe de commande 50 et le second organe de commande 51 peuvent alors être formés par des interrupteurs bistables.

Une première position du premier organe de commande 50 par rapport à une planche de bord 55 peut correspondre à la désactivation de la première commande et une seconde position du premier organe de commande 50 peut correspondre à l'activation de la première commande.

De même, une première position du second organe de commande 51 par rapport à une planche de bord 55 peut correspondre à la désactivation de la seconde commande et une seconde position du second organe de commande 51 peut correspondre à l'activation de la seconde commande.

Enfin, selon un autre exemple illustré à la figure 7, la première commande peut être activée par un premier organe de commande 60 mobile par rapport à un levier de commande 65, la seconde commande peut être activée par un deuxième organe de commande 61 distinct du premier organe de commande 60.

En outre, la première commande et la seconde commande peuvent être désactivées par un troisième organe de commande 62 mobile par rapport au levier de commande 65. Un tel troisième organe de commande 62 peut être formé par une gâchette et est distinct des premier organe de commande 60 et deuxième organe de commande 61.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. L'invention est définie dans les revendications.

## Revendications

1. Procédé (10, 20) d'entraînement au pilotage d'un giravion (1) comportant au moins deux moteurs (3, 4) et au moins un rotor (5) participant à une sustentation dudit giravion (1) dans l'air,
ledit procédé (10, 20) comportant au moins les étapes suivantes :
- pilotage (11, 21) dudit giravion (1) selon un mode (AEO) dans lequel chacun desdits au moins deux moteurs (3, 4) délivre une première puissance motrice (P1) pour entraîner en rotation au moins ledit au moins un rotor (5),
- activation (12, 22) d'une première commande pour démarrer une phase d'entraînement (E) simulant un vol asymétrique dans lequel un premier moteur (3) desdits au moins deux moteurs (3, 4) est configuré pour fournir exclusivement une puissance motrice audit au moins un rotor (5) et un second moteur (4) desdits au moins deux moteurs (3, 4) est configuré pour fournir aucune puissance motrice audit au moins un rotor (5),
- désactivation (15, 35) de ladite première commande pour quitter ladite phase d'entraînement (E),
**caractérisé en ce que** ladite phase d'entraînement (E) comporte une première phase de vol (V1) comportant :
∘ une première régulation (13, 23) avec un contrôleur (6) régulant lesdits au moins deux moteurs (3, 4) pour délivrer respectivement chacun une deuxième puissance motrice (P2) supérieure à ladite première puissance motrice (P1),
∘ un premier affichage (14, 24) avec un afficheur (7) d'une information porteuse d'au moins deux puissances simulées (PS1, PS2) aptes à être délivrées respectivement par lesdits au moins deux moteurs (3, 4), chacune desdites au moins deux puissances simulées (PS1, PS2) étant distincte de ladite deuxième puissance motrice (P2).

2. Procédé selon la revendication 1,
**caractérisé en ce que** lesdites au moins deux puissances simulées (PS1, PS2) comportent une première puissance simulée (PS1) et une seconde puissance simulée (PS2), ladite première puissance simulée (PS1) étant affichée comme exclusivement fournie par ledit premier moteur (3), ladite première puissance simulée (PS1) étant supérieure à ladite deuxième puissance motrice (P2) pendant ladite première phase de vol (V1), ladite seconde puissance simulée (PS2) étant affichée comme exclusivement fournie par ledit second moteur (4), ladite seconde puissance simulée (PS2) étant nulle pendant ladite première phase de vol (V1).

3. Procédé selon l'une quelconque des revendications 1 ou 2,
**caractérisé en ce que**, lorsque lesdites au moins deux puissances simulées (PS1, PS2) comportent une première puissance simulée (PS1) et une seconde puissance simulée (PS2), après ladite première phase de vol (V1), ledit procédé (20) comporte une activation (25) d'une seconde commande pour démarrer une deuxième phase de vol (V2) permettant de mettre en œuvre un pilotage d'entraînement dudit giravion (1) en autorotation, ladite deuxième phase de vol (V2) comportant :
- une deuxième régulation (26) avec ledit contrôleur (6) régulant lesdits au moins deux moteurs (3, 4), ladite deuxième régulation (26) mettant en œuvre successivement :
∘ une diminution (261) de ladite puissance motrice fournie respectivement par chacun desdits au moins deux moteurs (3, 4) de ladite deuxième puissance motrice (P2) à une valeur de seuil minimale (Pmin) inférieure à ladite première puissance motrice (P1),
∘ un maintien (262) de ladite puissance motrice fournie respectivement par chacun desdits au moins deux moteurs (3, 4) à ladite valeur de seuil minimale (Pmin), et
∘ une augmentation (263) de ladite puissance motrice fournie respectivement par chacun desdits au moins deux moteurs (3, 4) jusqu'à une valeur de seuil maximale (Pmax) supérieure ou égale à ladite première puissance motrice (P1),
- un deuxième affichage (27) avec ledit afficheur (7) d'une diminution d'une première valeur courante de ladite première puissance simulée (PS1) simulant une panne dudit premier moteur (3) puis une augmentation d'une seconde valeur courante de ladite seconde puissance simulée (PS2) simulant un démarrage dudit second moteur (4).

4. Procédé selon la revendication 3,
**caractérisé en ce que**, après ladite deuxième phase de vol (V2), ledit procédé (20) comporte une troisième phase de vol (V3) comportant :
∘ une troisième régulation (28) avec ledit contrôleur (6) régulant lesdits au moins deux moteurs (3, 4) pour délivrer respectivement chacun ladite valeur de seuil maximale (Pmax), et
∘ un troisième affichage (29) avec ledit afficheur (7) de ladite première puissance simulée (PS1) comme étant nulle, et de ladite seconde puissance simulée (PS2) comme étant supérieure à ladite deuxième puissance motrice (P2).

5. Procédé selon l'une quelconque des revendications 3 à 4,
**caractérisé en ce que** ladite première commande et ladite seconde commande sont activées et désactivées par un unique organe de commande (40).

6. Procédé selon l'une quelconque des revendications 3 à 4,
**caractérisé en ce que** ladite première commande est activée et désactivée par un premier organe de commande (50), ladite seconde commande est activée et désactivée par un second organe de commande (51) distinct dudit premier organe de commande (50).

7. Procédé selon l'une quelconque des revendications 3 à 4,
**caractérisé en ce que** ladite première commande est activée par un premier organe de commande (60), ladite seconde commande est activée par un deuxième organe de commande (61) distinct dudit premier organe de commande (60), ladite première commande et ladite seconde commande sont désactivées par un troisième organe de commande (62) distinct desdits premier organe de commande (60) et deuxième organe de commande (61).

8. Procédé selon l'une quelconque des revendications 1 à 7,
**caractérisé en ce que** ledit contrôleur (6) régule un couple moteur transmis par chacun desdits au moins deux moteurs (3, 4) à une chaine de transmission de puissance (8) permettant une transmission de puissance motrice audit au moins un rotor (5).

9. Procédé selon l'une quelconque des revendication 1 à 7,
**caractérisé en ce que** ledit contrôleur (6) régule une vitesse de rotation d'au moins deux générateurs de gaz (70, 71) respectifs de chacun desdits au moins deux moteurs (3, 4).

10. Procédé selon l'une quelconque des revendications 1 à 7,
**caractérisé en ce que** ledit contrôleur (6) régule une vitesse de rotation d'au moins deux arbres d'entrée (81, 82) d'une boîte de transmission de puissance principale (80), chacun desdits au moins deux arbres d'entrée (81, 82) étant respectivement entraîné en rotation par lesdits au moins deux moteurs (3, 4).

11. Programme d'ordinateur comprenant des instructions qui, lorsque ledit programme est exécuté, conduisent à mettre en œuvre le procédé (10, 20) d'entraînement au pilotage selon l'une quelconque des revendications 1 à 10.

12. Système (2) d'entraînement au pilotage d'un giravion (1) comportant au moins deux moteurs (3, 4) et au moins un rotor (5) participant à une sustentation dudit giravion dans l'air,
**caractérisé en ce que** ledit système (2) est configuré pour mettre en œuvre le procédé (10, 20) d'entraînement au pilotage selon l'une quelconque des revendications 1 à 10, ledit système (2) comportant ledit contrôleur (6) et ledit afficheur (7).

13. Giravion (1),
**caractérisé en ce que** ledit giravion (1) comporte un système d'entraînement (2) selon la revendication 12.

## Patentansprüche

1. Steuerungsantriebsverfahren (10, 20) für einen Drehflügler (1) mit mindestens zwei Motoren (3, 4) und mindestens einem Rotor (5), der zu einem Auftrieb des Drehflüglers (1) in der Luft beiträgt, wobei das Verfahren (10, 20) mindestens die folgenden Schritte umfasst:
- Steuern (11, 21) des Drehflügelflugzeugs (1) in einem Modus (AEO), in dem jeder der mindestens zwei Motoren (3, 4) eine erste Antriebsleistung (P1) liefert, um mindestens den mindestens einen Rotor (5) in Drehung zu versetzen,
- Aktivieren (12, 22) einer ersten Steuerung, um eine Antriebsphase (E) zu starten, die einen asymmetrischen Flug simuliert, in dem ein erster Motor (3) der mindestens zwei Motoren (3, 4) konfiguriert ist, um allein Antriebsleistung an den mindestens einen Rotor (5) zu liefern, und ein zweiter Motor (4) der mindestens zwei Motoren (3, 4) konfiguriert ist, um keine Antriebsleistung an den mindestens einen Rotor (5) zu liefern,
- Deaktivieren (15, 35) der ersten Steuerung zum Beenden der Antriebsphase (E),
**dadurch gekennzeichnet, dass** die Antriebsphase (E) eine erste Flugphase (V1) umfasst, die umfasst:
• erstes Regeln (13, 23) mit einer Steuerung (6), die die mindestens zwei Motoren (3, 4) so regelt, dass sie jeweils eine zweite Antriebsleistung (P2) liefern, die größer ist als die erste Antriebsleistung (P1),
• erstes Anzeigen (14, 24), mit einer Anzeige (7), einer Information, die mindestens zwei simulierte Leistungen (PS1, PS2) enthält, die jeweils von den mindestens zwei Motoren (3, 4) abgegeben werden können, wobei jede der mindestens zwei simulierten Leistungen (PS1, PS2) von der zweiten Antriebsleistung (P2) verschieden ist.

2. Verfahren nach Anspruch 1,
**dadurch gekennzeichnet, dass** die mindestens zwei simulierten Leistungen (PS1, PS2) eine erste simulierte Leistung (PS1) und eine zweite simulierte Leistung (PS2) umfassen, wobei die erste simulierte Leistung (PS1) als von dem ersten Motor (3) allein bereitgestellt angezeigt wird, wobei die erste simulierte Leistung (PS1) während der ersten Flugphase (V1) größer ist als die zweite Antriebsleistung (P2), und die zweite simulierte Leistung (PS2) als von dem zweiten Motor (4) allein bereitgestellt angezeigt wird, wobei die zweite simulierte Leistung (PS2) während der ersten Flugphase (V1) null ist.

3. Verfahren nach einem der Ansprüche 1 oder 2,
**dadurch gekennzeichnet, dass**, wenn die mindestens zwei simulierten Leistungen (PS1, PS2) eine erste simulierte Leistung (PS1) und eine zweite simulierte Leistung (PS2) umfassen, nach der ersten Flugphase (V1) das Verfahren (20) ein Aktivieren (25) einer zweiten Steuerung zum Starten einer zweiten Flugphase (V2) umfasst, die ein Steuern des Drehflüglers (1) im Autorotationsflug ermöglicht, wobei die zweite Flugphase (V2) umfasst:
- zweites Regeln (26) mit der Steuerung (6), die die mindestens zwei Motoren (3, 4) regelt, wobei das zweite Regeln (26) nacheinander durchführt:
• Verringern (261) der von jedem der mindestens zwei Motoren (3, 4) der zweiten Antriebsleistung (P2) gelieferten Antriebsleistung auf einen minimalen Schwellenwert (Pmin), der unter der ersten Antriebsleistung (P1) liegt,
• Halten (262) der jeweils von jedem der mindestens zwei Motoren (3, 4) gelieferten Antriebsleistung auf dem minimalen Schwellenwert (Pmin) und
• Erhöhen (263) der jeweils von jedem der mindestens zwei Motoren (3, 4) gelieferten Antriebsleistung auf einen maximalen Schwellenwert (Pmax), der größer oder gleich der ersten Antriebsleistung (P1) ist,
- zweites Anzeigen (27), mit der Anzeige (7), einer Verringerung eines ersten aktuellen Werts der ersten simulierten Leistung (PS1), die eine Störung des ersten Motors (3) simuliert, und anschließend einer Erhöhung eines zweiten aktuellen Werts der zweiten simulierten Leistung (PS2), die einen Start des zweiten Motors (4) simuliert.

4. Verfahren nach Anspruch 3,
**dadurch gekennzeichnet, dass** nach der zweiten Flugphase (V2) das Verfahren (20) eine dritte Flugphase (V3) umfasst, die umfasst:
• drittes Regeln (28) mit der Steuerung (6), die die mindestens zwei Motoren (3, 4) regelt, um jeweils den maximalen Schwellenwert (Pmax) zu liefern, und
• drittes Anzeigen (29), mit der Anzeige (7), der ersten simulierten Leistung (PS1) als Null und der zweiten simulierten Leistung (PS2) als größer als die zweite Antriebsleistung (P2).

5. Verfahren nach einem der Ansprüche 3 bis 4,
**dadurch gekennzeichnet, dass** die erste Steuerung und die zweite Steuerung durch ein einziges Steuerelement (40) aktiviert und deaktiviert werden.

6. Verfahren nach einem der Ansprüche 3 bis 4,
**dadurch gekennzeichnet, dass** die erste Steuerung durch ein erstes Steuerelement (50) aktiviert und deaktiviert wird und die zweite Steuerung durch ein zweites Steuerelement (51) aktiviert und deaktiviert wird, das von dem ersten Steuerelement (50) verschieden ist.

7. Verfahren nach einem der Ansprüche 3 bis 4,
**dadurch gekennzeichnet, dass** die erste Steuerung durch ein erstes Steuerelement (60) aktiviert wird, die zweite Steuerung durch ein zweites Steuerelement (61) aktiviert wird, das von dem ersten Steuerelement (60) verschieden ist, und die erste Steuerung und die zweite Steuerung durch ein drittes Steuerelement (62) deaktiviert werden, das von dem ersten Steuerelement (60) und dem zweiten Steuerelement (61) verschieden ist.

8. Verfahren nach einem der Ansprüche 1 bis 7,
**dadurch gekennzeichnet, dass** die Steuerung (6) ein Drehmoment regelt, das von jedem der mindestens zwei Motoren (3, 4) auf einen Antriebsstrang (8) übertragen wird, der eine Kraftübertragung auf den mindestens einen Rotor (5) ermöglicht.

9. Verfahren nach einem der Ansprüche 1 bis 7,
**dadurch gekennzeichnet, dass** die Steuerung (6) eine Drehzahl von jeweils mindestens zwei Gasturbinen (70, 71) eines jeden der mindestens zwei Motoren (3, 4) regelt.

10. Verfahren nach einem der Ansprüche 1 bis 7,
**dadurch gekennzeichnet, dass** die Steuerung (6) eine Drehzahl von mindestens zwei Eingangswellen (81, 82) eines Hauptantriebsgetriebes (80) regelt, wobei jede der mindestens zwei Eingangswellen (81, 82) jeweils von den mindestens zwei Motoren (3, 4) drehangetrieben wird.

11. Computerprogramm mit Befehlen, die bei Ausführung des Programms dazu führen, dass das Steuerungsantriebsverfahren gemäß einem der Ansprüche 1 bis 10 durchgeführt wird.

12. Steuerungsantriebssystem (2) für einen Drehflügler (1) mit mindestens zwei Motoren (3, 4) und mindestens einem Rotor (5), der zum Auftrieb des Drehflüglers in der Luft beiträgt,
**dadurch gekennzeichnet, dass** das System (2) konfiguriert ist, um das Steuerungsantriebsverfahren (10, 20) nach einem der Ansprüche 1 bis 10 durchzuführen, wobei das System (2) die Steuerung (6) und die Anzeige (7) umfasst.

13. Drehflügler (1),
**dadurch gekennzeichnet, dass** der Drehflügler (1) ein Steuerungsantriebssystem (2) nach Anspruch 12 umfasst.

## Claims

1. Method (10, 20) for training the piloting of a rotorcraft (1) comprising at least two engines (3, 4) and at least one rotor (5) contributing to helping keep said rotorcraft (1) in the air,
said method (10, 20) comprising at least the following steps:
- piloting (11, 21) said rotorcraft (1) according to a mode (AEO) in which each of said at least two engines (3, 4) delivers a first engine power (P1) to rotate at least said at least one rotor (5),
- activating (12, 22) a first command to start a training phase (E) simulating an asymmetric flight in which a first engine (3) of said at least two engines (3, 4) is configured to supply an engine power exclusively to said at least one rotor (5) and a second engine (4) of said at least two engines (3, 4) is configured to supply no engine power to said at least one rotor (5),
- deactivating (15, 35) said first command to leave said training phase (E),
**characterised in that** said training phase (E) comprises a first flight phase (V1) comprising:
∘ a first regulation (13, 23) with a controller (6) regulating said at least two engines (3, 4) each to deliver respectively a second engine power (P2) greater than said first engine power (P1),
∘ a first display (14, 24) with a display unit (7) of an item of carrier information of at least two simulated powers (PS1, PS2) capable of being delivered respectively by said at least two engines (3, 4), each of said at least two simulated powers (PS1, PS2) being distinct from said second engine power (P2).

2. Method according to claim 1,
**characterised in that** said at least two simulated powers (PS1, PS2) comprise a first simulated power (PS1) and a second simulated power (PS2), said first simulated power (PS1) being displayed as exclusively supplied by said first engine (3), said first simulated power (PS1) being greater than said second engine power (P2) during said flight phase (V1), said second simulated power (PS2) being displayed as exclusively supplied by said second engine (4), said second simulated power (PS2) being zero during said first flight phase (V1).

3. Method according to any one of claims 1 or 2,
**characterised in that**, when said at least two simulated powers (PS1, PS2) comprise a first simulated power (PS1) and a second simulated power (PS2), after said first flight phase (V1), said method (20) comprises an activation (25) of a second command to start a second flight phase (V2) making it possible to implement a training of piloting of said rotorcraft (1) in autorotation, said second flight phase (V2) comprising:
- a second regulation (26) with said controller (6) regulating said at least two engines (3, 4), said second regulation (26) implementing successively:
∘ a decrease (261) in said engine power supplied respectively by each of said at least two engines (3, 4) of said second engine power (P2) to a minimum threshold value (Pmin) less than said first engine power (P1),
∘ a maintenance (262) of said engine power supplied respectively by each of said at least two engines (3, 4) at said minimum threshold value (Pmin), and
∘ an increase (263) in said engine power supplied respectively by each of said at least two engines (3, 4) up to a maximum threshold value (Pmax) greater than or equal to said first engine power (P1),
- a second display (27) with said display unit (7) of a decrease in a first current value of said first simulated power (PS1) simulating a failure of said first engine (3) then an increase of a second current value of said second simulated power (PS2) simulating a starting of said second engine (4).

4. Method according to claim 3,
**characterised in that**, after said second flight phase (V2), said method (20) comprises a third flight phase (V3) comprising:
∘ a third regulation (28) with said controller (6) regulating said at least two engines (3, 4) to each deliver respectively said maximum threshold value (Pmax), and
∘ a third display (29) with said display unit (7) of said first simulated power (PS1) as zero, and of said second simulated power (PS2) as being greater than said second engine power (P2).

5. Method according to any one of claims 3 to 4,
**characterised in that** said first command and said second command are activated and deactivated by one single command member (40).

6. Method according to any one of claims 3 to 4,
**characterised in that** said first command is activated and deactivated by a first command member (50), said second command is activated and deactivated by a second command member (51) distinct from said first command member (50).

7. Method according to any one of claims 3 to 4,
**characterised in that** said first command is activated by a first command member (60), said second command is activated by a second command member (61) distinct from said first command member (60), said first command and said second command are deactivated by a third command member (62) distinct from said first command member (60) and second command member (61).

8. Method according to any one of claims 1 to 7,
**characterised in that** said controller (6) regulates an engine torque transmitted by each of said at least two engines (3, 4) to a power transmission chain (8) enabling an engine power transmission to said at least one rotor (5).

9. Method according to any one of claims 1 to 7,
**characterised in that** said controller (6) regulates a rotation speed of at least two respective gas generators (70, 71) of each of said at least two engines (3, 4).

10. Method according to any one of claims 1 to 7,
**characterised in that** said controller (6) regulates a rotation speed of at least two drive shafts (81, 82) of a main power transmission box (80), each of said at least two drive shafts (81, 82) being respectively rotated by said at least two engines (3, 4).

11. Computer program comprising instructions which, when said program is executed, lead to implementing the method (10, 20) for training the piloting according to any one of claims 1 to 10.

12. System (2) for training the piloting of a rotorcraft (1) comprising at least two engines (3, 4) and at least one rotor (5) contributing to a sustentation of said rotorcraft in the air,
**characterised in that** said system (2) is configured to implement the method (10, 20) for training the piloting according to any one of claims 1 to 10, said system (2) comprising said controller (6) and said display unit (7).

13. Rotorcraft (1),
**characterised in that** said rotorcraft (1) comprises a training system (2) according to claim 12.
